# EUROPÄISCHE PATENTANMELDUNG

(11) **EP 1 998 075 A2**
(43) Veröffentlichungstag der Anmeldung: **03.12.2008**
(21) Anmeldenummer: 08008326.4
(22) Anmeldetag: 02.05.2008
(51) Int. Cl.: F16F 15/131

(54) **Vorrichtung zum Dämpfen von Torsionsschwingungen**

(30) Priorität: 29.05.2007 DE 102007024939
(71) Anmelder: LuK Lamellen und Kupplungsbau Beteiligungs KG, 77815 Bühl (DE)
(72) Erfinder: Mán, Lászlo, Dr., 77833 Ottersweier-Unzhurst (DE); Friedmann, Oswald, 77839 Lichtenau (DE)

(57) **Zusammenfassung**

Die Erfindung betrifft eine Vorrichtung zum Dämpfen von Torsionsschwingungen einer Brennkraftmaschine, die wenig Bauraum benötigt und mit der die im Betrieb der Brennkraftmaschine auftretenden Schwingungen geglättet werden, indem die Primärmasse (1) und die Sekundärmasse (2) des geteilten Schwungrades über mindestens eine ein Hebelsystem umfassende Verstelleinrichtung (4) miteinander gekoppelt sind, die mit einem Energiespeicher (3) in Wirkverbindung steht.

## Beschreibung

Die Erfindung betrifft eine Vorrichtung zum Dämpfen von Torsionsschwingungen einer Brennkraftmaschine. Diese Vorrichtung mit den Merkmalen des Oberbegriffs des Anspruchs 1 dient gleichzeitig dazu, ein in eine Primärmasse und in eine Sekundärmasse geteiltes Schwungrad miteinander zu verbinden, wobei die Primärmasse bzw. die Primärseite mit der Abtriebswelle der Brennkraftmaschine drehfest verbunden und die Sekundärmasse bzw. Sekundärseite mit einer Drehmomentübertragungseinrichtung verbindbar ist.

Zur Dämpfung von Torsionsschwingungen ist aus der deutschen Patentschrift DE 39 30 715 C2 ein Zweimassenschwungrad (ZMS) mit einem Federaggregat zum Übertragen des Drehmoments des Antriebsstranges und eine mit dem Federaggregat in Reihe geschaltete, schlupffähige Reibeinrichtung bekannt.

Weiterhin ist aus der deutschen Patentschrift DE 40 40 605 B4 eine Vorrichtung zum Dämpfen von Torsionsschwingungen bekannt, die in sich elastisch federnd verspannte, eingebaute Bauteile umfasst, die eine zu ihrer Verspannung dienende Federkraft selbst erzeugen.

Zur Regelung der Anpresskraft eines Energiespeichers mit geringem Energieaufwand zeigt die DE 10 2004 009 832 A1 eine Lösung auf, bei der durch eine Verlagerung des Auflage- bzw. Drehpunktes eines Hebels die Betätigungskraft für die Energiespeichereinrichtung veränderbar ist. Diese Betätigungskraft kann auch, wie aus der DE 10 2006 019 251 A1 hervorgeht, über ein Kraftübertragungselement übertragen werden, das entsprechend verdrehbar gelagert ist, so dass in Abhängigkeit des Verdrehwinkels die am Kraftübertragungselement ausgeleitete Kraft gegenüber der in dieses eingeleiteten Kraft veränderbar ist.

Die Aufgabe der Erfindung besteht darin, unter Verwendung eines geteilten Schwungrades eine Vorrichtung zur Dämpfung von Torsionsschwingungen zu schaffen, die wenig Bauraum benötigt und mit der die im Betrieb der Brennkraftmaschine auftretenden Schwingungen geglättet werden.

Diese Aufgabe wird mit einer Vorrichtung zum Dämpfen von Torsionsschwingungen mit den Merkmalen des Anspruchs 1 gelöst.

Danach werden die Primärmasse und die Sekundärmasse eines geteilten Schwungrades über eine Dämpfungsvorrichtung miteinander gekoppelt, die aus mindestens einer mit einem Energiespeicher in Wirkverbindung stehenden, ein Hebelsystem umfassenden Verstelleinrichtung besteht. Dabei ist bekanntermaßen die Primärmasse drehfest mit der Abtriebswelle einer Antriebseinheit, wie einer Brennkraftmaschine verbunden, von der im Betriebszustand die Torsionsschwingungen ausgehen. Diese Torsionsschwingungen werden mittels des die beiden Massen verbindenden Hebelsystems dadurch geglättet, indem die Schwingungen der ebenfalls bekanntermaßen mit einem Eingangsteil einer Drehmomentübertragungseinrichtung verbindbaren Sekundärmasse auf eine von einer Steuerung errechnete Schwingungsamplitude oder einen definierten Dämpfungsfaktor verändert werden. Somit ist die Hebelübersetzung in Abhängigkeit des zwischen der Primärmasse und der Sekundärmasse herrschenden Drehmoments veränderbar.

Außerdem kann durch den Einbau der erfindungsgemäßen Dämpfungsvorrichtung in das geteilte Schwungrad Bauraum eingespart werden. Der einfache Aufbau der Dämpfungsvorrichtung ermöglicht sowohl eine kostengünstige Herstellung als auch Montage.

In einer vorteilhaften Ausgestaltung der Erfindung weist die Verstelleinrichtung eine Rolleinrichtung auf, die an einem Koppelglied befestigt ist, das mit einem separaten Antrieb verbunden ist. Auf diese Weise ist die Rolleinrichtung, die aus mindestens zwei miteinander gekoppelten Stützrollen besteht, entlang einer vorgegebenen Bahn separat bewegbar.

Diese Bahn wird gebildet, indem, je nach Anwendungsfall, entweder die Primärmasse oder die Sekundärmasse paarweise zueinander beabstandet, vorzugsweise in radialer Richtung mit Abstützungen versehen ist. Eine der Abstützung dient dabei zum Abstützen des mit der Verstelleinrichtung in Wirkverbindung stehenden Energiespeichers; die andere Abstützung zur Abstützung von mindestens einer Stützrolle der Rolleinrichtung. Somit bildet diese Abstützung die Bahnbegrenzung für mindestens eine Stützrolle der Rolleinrichtung auf einer Seite. Die andere Bahnbegrenzung für mindestens eine weitere Stützrolle der Rolleinrichtung wird von einem Hebel realisiert, an dem diese entlang geführt wird.

Dieser Hebel ist in vorteilhafter Weise endseitig über eine Aufnahme mit der Sekundärmasse gekoppelt.

In vorteilhafter Ausgestaltung der Erfindung ist die zwischen den beiden Massen wirksame Federsteifigkeit des Energiespeichers nahezu Null, der mit seiner Vorspannkraft auf einen Angriffspunkt am Hebel einwirkt. Das Kräftegleichgewicht ist erreicht, wenn dieser Angriffspunkt zwischen dem Energiespeicher und der Rolleinrichtung eingeklemmt wird. Das bedeutet, dass sich die Rolleinrichtung ebenfalls in Höhe dieses Angriffspunkts befindet.

In vorteilhafter Weise ist der Energiespeicher als Druck- oder Tellerfeder ausgestaltet.

Weitere Vorteile und vorteilhafte Ausgestaltungen der Erfindung ergeben sich aus dem nachfolgenden Ausführungsbeispiel anhand von Zeichnungen.

Es zeigen:
- Figur 1: eine schematische Darstellung einer erfindungsgemäßen Dämpfungsvorrichtung,
- Figur 2: eine weitere Ausgestaltung der Dämpfungsvorrichtung gemäß Figur 1.

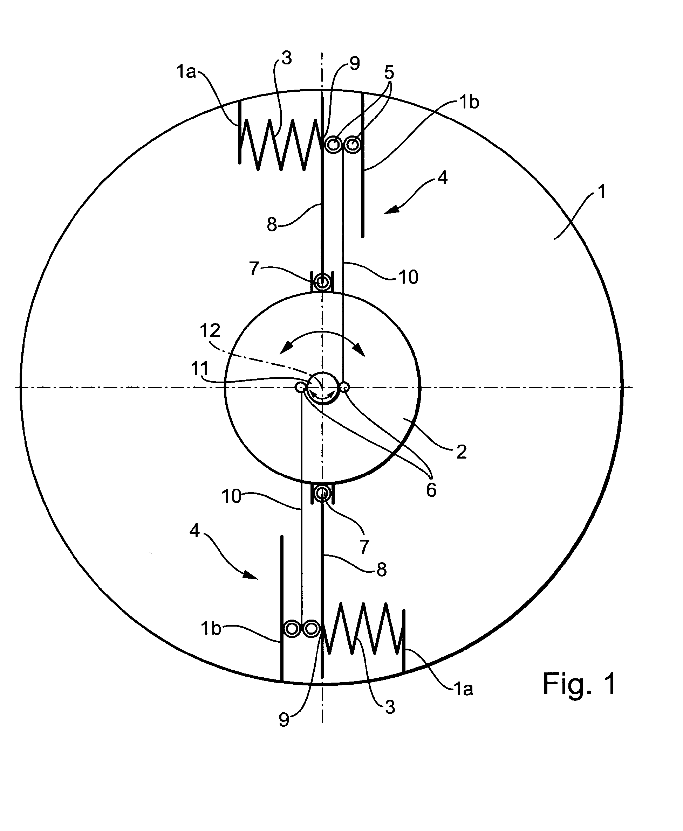

Aus der Figur 1 ist schematisch ein Zweimassenschwungrad (ZMS) dargestellt, das in eine Primärmasse 1 und eine Sekundärmasse 2 aufgeteilt ist. Die Primärmasse 1 ist dabei mit einer nicht dargestellten Kurbelwelle einer nicht dargestellten Brennkraftmaschine verbunden und die Sekundärmasse 2 ist drehfest an einem nicht dargestellten Eingangsteil einer ebenfalls nicht dargestellten Drehmomentübertragungseinrichtung befestigbar. An der Primärmasse ist mittels eines nicht dargestellten Lagers, zum Beispiel eines Wälzlagers, die Sekundärmasse 2 koaxial und verdrehbar um eine Achse 12 gelagert. Diese beiden Massen 1 und 2 sind schwingungstechnisch über mindestens eine erfindungsgemäße Dämpfungsvorrichtung miteinander gekoppelt, die aus einer mit einem Energiespeicher 3 in Wirkverbindung stehenden Verstelleinrichtung 4 besteht. Allerdings ist es schwingungstechnisch vorteilhafter zwischen beiden Massen 1, 2, mindestens zwei sich diametral gegenüberliegende Dämpfungsvorrichtungen vorzusehen, wie dies in Figur 1 der Fall ist.

Nachfolgend soll anhand des Aufbaus einer Dämpfungsvorrichtung die schwingungstechnische Kopplung zwischen beiden Massen 1, 2 und die damit erreichbare Schwingungsdämpfung näher erläutert werden.

Zur Aufnahme der Dämpfungsvorrichtungen in ein geteiltes Schwungrad sind in diesem Ausführungsbeispiel in der Primärmasse 1 in radialer Richtung jeweils paarweise zueinander beabstandet Abstützungen 1 a und 1 b vorgesehen, zwischen denen sich die Verstelleinrichtung 4 mit dem Energiespeicher 3 abstützen kann. Allerdings ist es in einem anderen Anwendungsfall auch möglich, die Sekundärmasse 2 mit Abstützungen 1a, 1 b zur Aufnahme einer Verstelleinrichtung 4 vorzusehen. Die Verstelleinrichtung 4 wird im Wesentlichen aus einem endseitig aufgenommenen bzw. gelagerten Hebel 8 gebildet, der auch im Ruhezustand von dem mit der Verstelleinrichtung 4 in Wirkverbindung stehenden Energiespeicher 3 in einem Angriffspunkt 9 mit einer Kraft beaufschlagt wird. Zur Verstelleinrichtung 4 gehört außerdem eine bewegbare Rolleinrichtung 5, die in diesem Beispiel aus zwei Stützrollen gebildet wird. Diese Stützrollen 5 werden zur Veränderung der Längenverhältnisse am Hebel 8 an diesem entlang geführt. Das in Richtung Sekundärmasse 2 zeigende Ende des Hebels 8 wird in einer Aufnahme 7 aufgenommen, die dazu an der Sekundärmasse 2 vorgesehen ist. Der Hebel 8 wird in einem Angriffspunkt 9 von einer Kraft beaufschlagt, die von dem Energiespeicher 3 geliefert wird. Dieser Energiespeicher 3 ist in dieser Figur 1 als Druckfeder ausgeführt, die vorzugsweise eine Federsteifigkeit aufweist, die nahezu Null ist. Dies bedeutet, dass der Kraftangriffspunkt auf der Feder 3 nahezu konstant bleibt. Zwischen dem Hebel 8 und der Abstützung 1 b sind die zwei hintereinander angeordneten, gegenläufig bewegbaren Stützrollen 5 mittels eines mit diesem verbundenen Koppelgliedes 10 entlang des Hebels 8 bewegbar, da dieses über Anlenkpunkte 6 mit einem Antrieb 11 verbunden ist. Dieser Antrieb 11 kann beispielsweise ein Aktor sein, der zur Kompensation der von der Primärmasse 1 herrührenden Schwingungen entsprechend angesteuert wird, so dass eine Verschiebung der gegenläufig rotierenden Stützrollen 5 in radialer Richtung innerhalb einer vorgeschriebenen Bahn stattfindet. Die Bahn dieser Stützrollen 5 wird dabei durch deren beidseitige Begrenzungen in Form der Abstützung 1 b und dem Hebel 8 vorgegeben. Durch die Verschiebung der Stützrollen 5 wird das Kraft- bzw. Längenverhältnis am Hebel 8 verändert. Dabei ergibt sich das jeweils aktuelle Verhältnis aus der auf die Druckfeder 3 einwirkenden Kraft mit dem Abstand vom Angriffspunkt 9 der Federkraft zum jeweiligen Auflagepunkt der am Hebel 8 anliegenden Stützrolle 5 zur in diesem Punkt wirkenden Kraft mit dem Abstand dieser Stützrolle 5 zur Aufnahme 7.

Aus der radialen Verschiebung der sich am Hebel 8 abstützenden Stützrolle 5 ergibt sich ein entsprechend verlagerbarer Drehpunkt am Hebel 8, der gleichzeitig dem Auflagepunkt der an dieser anliegenden Stützrolle 5 entspricht. Bei dieser Verschiebung wird mittels des Hebels 8 ein Moment über die Aufnahme 7 auf die Sekundärmasse 2 übertragen, so dass sich die beiden Massen 1, 2 relativ zueinander entgegengesetzt bewegen. Eine Bewegung vollzieht dabei ca. einen Winkel von ± 5° um die Drehachse 12 des ZMS. In Verbindung mit der vorgespannten Druckfeder 3 wird die Kraft am Angriffspunkt 9 noch verstärkt. Da die zwischen den beiden Massen 1, 2 wirksame Federsteifigkeit des Energiespeichers nahezu Null ist, ist die Steigung der Kennlinie des ZMS bei jedem Hebelverhältnis ebenso Null, so dass jederzeit eine optimale Schwingungsisolierung bzw. Schwingungsglättung ermöglicht wird, indem das Koppelglied 10 und damit die Stützrollen 5 über den Antrieb 11 so weit verschoben werden, dass ein mittleres übertragbares Motormoment eingestellt wird. Auf diese Weise werden also Schwingungsspitzen eliminiert. Bei der Verstellung des Hebelverhältnisses nimmt der schwingende Hebel 8 eine Schrägstellung bezüglich der senkrechten Ebene des ZMS ein. Die Verschiebung der Stützrollen 5 erfolgt vorzugsweise in der Schwingungsperiode, in der die rückstellende Kraft durch die Schrägstellung des Hebels 8 in die Richtung der beabsichtigten Verschiebung zeigt. Auf diese Weise wird die Verschiebung erleichtert, was dazu führt, dass nur sehr wenig zusätzliche Energie vom Antrieb 11 für die Verstellung der Stützrollen benötigt wird, da der Hauptanteil der Verstellenergie vom Antriebsstrang selbst kommt. Außerdem kann die in der Druckfeder 3 gespeicherte Energie niedrig sein.

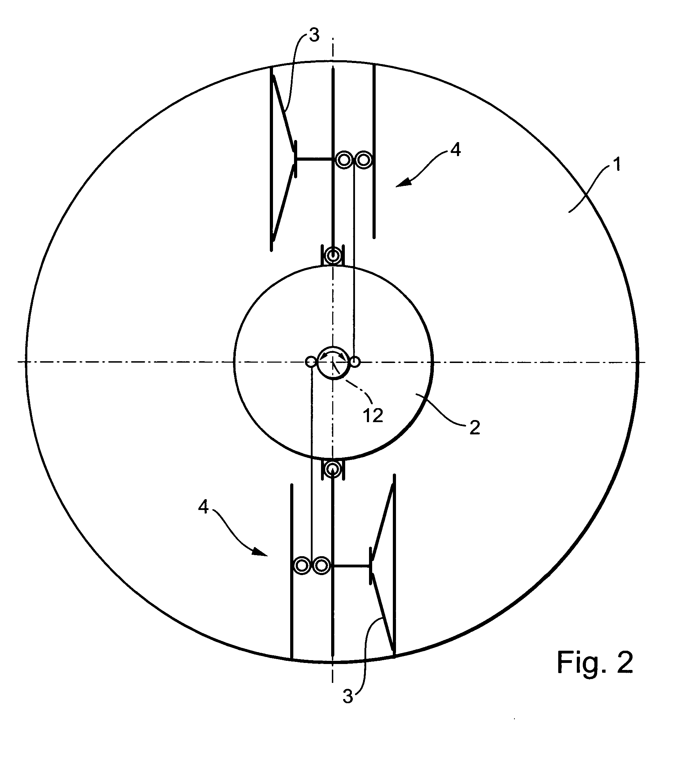

Figur 2 zeigt eine andere Möglichkeit der Ausgestaltung der Dämpfungsvorrichtung gemäß Figur 1. Der Aufbau dieser Vorrichtung unterscheidet sich dabei von dem in Figur 1 dadurch, dass der Energiespeicher 3 als Tellerfeder mit einer Steifigkeit von ungefähr Null ausgeführt ist.

Wie aus den Figuren 1 und 2 hervorgeht, sind die Begrenzungen für die Bahn der Rolleinrichtung 5 gerade ausgeführt. Es ist allerdings auch möglich, diese Begrenzungen mit einer entsprechenden Kontur zu versehen. Über diese Kontur ist es möglich, die die Rückstellkraft entsprechend zu optimieren.

Ebenso ist es möglich, anstelle der für die Rolleinrichtung 5 einen verschiebbaren Rollwagen vorzusehen, dessen Rollen so angeordnet sind, dass sie an der jeweiligen Begrenzung der Bahn, also dem Hebel 8 auf der einen Seite und der Abstützung 1b auf der anderen Seite, abrollen.

Aus der in den Figuren 1 und 2 beschriebenen Dämpfungsvorrichtung geht deren einfacher Aufbau hervor, was eine kostengünstige Herstellung zur Folge hat. Außerdem ist eine einfache Montage im ZMS möglich.

### Bezugszeichenliste

- 1: Primärmasse
- 1 a: Abstützung
- 1 b: Abstützung
- 2: Sekundärmasse
- 3: Energiespeicher / Druckfeder / Tellerfeder
- 4: Verstelleinrichtung
- 5: Rolleinrichtung / Stützrolle
- 6: Anlenkpunkt
- 7: Aufnahme
- 8: Hebel
- 9: Angriffspunkt
- 10: Koppelglied
- 11: Antrieb
- 12: Drehachse

## Patentansprüche

1. Vorrichtung zum Dämpfen von Torsionsschwingungen mit einem geteilten Schwungrad, das sich aus einer Primärmasse (1) und einer Sekundärmasse (2) zusammensetzt, wobei die Primärmasse (1) drehfest mit der Abtriebswelle einer Antriebseinheit, wie einer Brennkraftmaschine, verbunden und die Sekundärmasse (2) mit einem Eingangsteil einer Drehmomentübertragungseinrichtung verbindbar ist, **dadurch gekennzeichnet, dass** die Primärmasse (1) und die Sekundärmasse (2) über mindestens eine mit einem Energiespeicher (3) in Wirkverbindung stehende, ein Hebelsystem umfassende Verstelleinrichtung (4) miteinander gekoppelt sind, wobei die Hebelübersetzung des auf den Energiespeicher (3) wirkenden Hebelsystems veränderbar ist.

2. Vorrichtung nach Anspruch 1, **dadurch gekennzeichnet, dass** die Hebelübersetzung in Abhängigkeit des zwischen der Primärmasse (1) und der Sekundärmasse (2) herrschenden Drehmoments veränderbar ist.

3. Vorrichtung nach Anspruch 1, **dadurch gekennzeichnet, dass** die Verstelleinrichtung (4) eine Rolleinrichtung (5) aufweist, die an einem Koppelglied (10) befestigt ist, das mit einem Antrieb (11) verbunden ist.

4. Vorrichtung nach Anspruch 1, **dadurch gekennzeichnet, dass** die Rolleinrichtung (5) aus mindestens zwei miteinander gekoppelten Stützrollen besteht.

5. Vorrichtung nach Anspruch 1, **dadurch gekennzeichnet, dass** die Primärmasse (1) oder Sekundärmasse (2) mit Abstützungen (1a, 1b) versehen ist, wobei sich der Energiespeicher (3) an einer der Abstützungen (1a, 1 b) abstützt und mindestens eine der Stützrollen (5) an der anderen Abstützung (1a, 1 b) abrollt.

6. Vorrichtung nach Anspruch 5, **dadurch gekennzeichnet, dass** die Abstützungen (1a, 1 b) in radialer Richtung paarweise an einer Masse (1, 2) angeordnet und zueinander beabstandet sind.

7. Vorrichtung nach Anspruch 1 und 5, **dadurch gekennzeichnet, dass** die mindestens eine der anderen Stützrollen (5) an einem Hebel (8) entlang geführt wird.

8. Vorrichtung nach Anspruch 1 und7, **dadurch gekennzeichnet, dass** der Energiespeicher (3) in einem Angriffspunkt (9) den Hebel (8) mit einer Kraft beaufschlagt.

9. Vorrichtung nach Anspruch 1 und 7, **dadurch gekennzeichnet, dass** der Hebel (8) endseitig über eine Aufnahme (7) mit der Sekundärmasse (2) gekoppelt ist.

10. Vorrichtung nach Anspruch 1, **dadurch gekennzeichnet, dass** der Energiespeicher (3) als Druck- oder Tellerfeder ausgebildet ist.

11. Vorrichtung nach Anspruch 1, **dadurch gekennzeichnet, dass** die zwischen den beiden Massen (1, 2) wirksame Federsteifigkeit des Energiespeichers (3) nahezu Null ist.
